# EUROPEAN PATENT APPLICATION

(11) **EP 4 737 272 A1**
(43) Date of publication of application: **06.05.2026**
(21) Application number: 23942614.1
(22) Date of filing: 30.06.2023
(51) Int. Cl.: B62D 6/00

(54) **STEERING CONTROL DEVICE AND STEERING CONTROL METHOD**

(71) Applicant: JTEKT CORPORATION, Kariya-shi, Aichi 448-8652 (JP)
(72) Inventor: MIYAKE, Junya, Kariya-shi, Aichi 448-8652 (JP); TAMAIZUMI, Terutaka, Kariya-shi, Aichi 448-8652 (JP); NAMIKAWA, Isao, Kariya-shi, Aichi 448-8652 (JP); ANRAKU, Koji, Kariya-shi, Aichi 448-8652 (JP); HOSONO, Hiroshi, Kariya-shi, Aichi 448-8652 (JP)
(74) Representative: Winter, Brandl - Partnerschaft mbB
(86) International application number: PCT/JP2023/024377
(87) International publication number: WO 2025/004322

(57) **Abstract**

A steering control device (50) is configured to execute a reaction-force-command-value setting process and an operation process. The reaction-force-command-value setting process is a process of calculating a reaction torque command value that is a command value of a torque variable indicating a reaction force, and includes a process of superimposing, on the reaction torque command value, a correction amount that has a negative correlation with an amount of change in a steering torque that is a torque input to a steering shaft (14) by a driver. The operation process is a process of operating a reaction force actuator according to the reaction torque command value.

## Description

### TECHNICAL FIELD

The present disclosure relates to steering control devices and steering control methods.

### BACKGROUND ART

Patent Document 1 below describes a device that mechanically limits the rotation range of a steering shaft in a steer-by-wire system. Specifically, the device includes a first rotary member that rotates in conjunction with the steering shaft, and a second rotary member that is rotated together with the first rotary member as the first rotary member rotates. The device further includes a restraining member that contacts the second rotary member to restrain rotation of the second rotary member when the rotation angle of the second rotary member reaches a predetermined angle. When the first rotary member rotates by a predetermined amount from a steering angle at which the rotation of the second rotary member is restrained by the restraining member, the first rotary member and the second rotary member contact each other such that the second rotary member restrains rotation of the first rotary member. As a result, rotation of the first rotary member is restrained.

### Related Art Documents

### Patent Documents

Patent Document 1: Japanese Unexamined Patent Application Publication No. 2020-69844 (JP 2020-69844 A)

### SUMMARY OF THE INVENTION

### Problem to be Solved by the Invention

In the above device, the magnitude of torque that restrains rotation of the steering shaft differs between a state where the second rotary member is rotated together with the first rotary member as the first rotary member rotates and a state where the first rotary member rotates alone. Therefore, when switching occurs from one of the above two states to the other, the torque applied to the steering shaft undergoes a step change, which may impair the steering feel of the driver.

### Means for Solving the Problem

One aspect of the present disclosure provides a steering control device that is configured to operate a reaction force actuator configured to apply a reaction force to a steering shaft configured to be operated to rotate according to steering by a driver with power transmission to a steered wheel being interrupted. The reaction force actuator includes: a first rotary member configured to rotate in conjunction with the steering shaft; a second rotary member configured to be rotated together with the first rotary member as the first rotary member rotates; and a restraining member configured to, when a rotation angle of the second rotary member reaches a predetermined angle, contact the second rotary member to restrain rotation of the second rotary member. The first rotary member and the second rotary member are configured to, when the first rotary member rotates by a predetermined amount from an angle at which the rotation of the second rotary member is restrained, contact each other such that the second rotary member restrains rotation of the first rotary member. The steering control device is configured to execute a reaction-force-command-value setting process and an operation process. The reaction-force-command-value setting process is a process of calculating a reaction torque command value that is a command value of a torque variable indicating the reaction force, and includes a process of superimposing, on the reaction torque command value, a correction amount that has a negative correlation with an amount of change in a steering torque that is a torque input to the steering shaft by the driver. The operation process is a process of operating the reaction force actuator according to the reaction torque command value.

Another aspect of the present disclosure provides a steering control method for operating a reaction force actuator configured to apply a reaction force to a steering shaft configured to be operated to rotate according to steering by a driver with power transmission to a steered wheel being interrupted. The reaction force actuator includes: a first rotary member configured to rotate in conjunction with the steering shaft; a second rotary member configured to be rotated together with the first rotary member as the first rotary member rotates; and a restraining member configured to, when a rotation angle of the second rotary member reaches a predetermined angle, contact the second rotary member to restrain rotation of the second rotary member. The first rotary member and the second rotary member are configured to, when the first rotary member rotates by a predetermined amount from an angle at which the rotation of the second rotary member is restrained, contact each other such that the second rotary member restrains rotation of the first rotary member. The steering control method includes: executing a reaction-force-command-value setting process; and executing an operation process. The reaction-force-command-value setting process is a process of calculating a reaction torque command value that is a command value of a torque variable indicating the reaction force, and includes a process of superimposing, on the reaction torque command value, a correction amount that has a negative correlation with an amount of change in a steering torque that is a torque input to the steering shaft by the driver. The operation process is a process of operating the reaction force actuator according to the reaction torque command value.

### BRIEF DESCRIPTION OF THE DRAWINGS

[FIG. 1] FIG. 1 is a diagram illustrating the configuration of a steering system according to a first embodiment.
[FIG. 2] FIG. 2 is an exploded perspective view illustrating part of the configuration of a reaction force actuator according to the embodiment.
[FIG. 3] FIG. 3 is an exploded perspective view illustrating part of the configuration of the reaction force actuator according to the embodiment.
[FIG. 4] FIG. 4 is a sectional view illustrating part of the configuration of the reaction force actuator according to the embodiment.
[FIG. 5] FIG. 5 is a diagram illustrating the operation of a stopper function of the reaction force actuator according to the embodiment.
[FIG. 6] FIG. 6 is a block diagram illustrating processes executed by a control device according to the embodiment.
[FIG. 7] FIG. 7 is a block diagram illustrating details of part of the processes executed by the control device according to the embodiment.
[FIG. 8] FIG. 8 is a diagram illustrating the relationship between the operation of the stopper function of the reaction force actuator and torque.
[FIG. 9] FIG. 9 is a flowchart illustrating the procedure of a process executed by a control device according to a second embodiment.
[FIG. 10] FIG. 10 is a block diagram illustrating details of part of processes executed by a control device according to a third embodiment.
[FIG. 11] FIG. 11 is an exploded perspective view illustrating part of the configuration of a reaction force actuator according to a modification.

### MODES FOR CARRYING OUT THE INVENTION

### <First Embodiment>

Hereinafter, a first embodiment will be described with reference to the drawings.

### "Prerequisite Configuration"

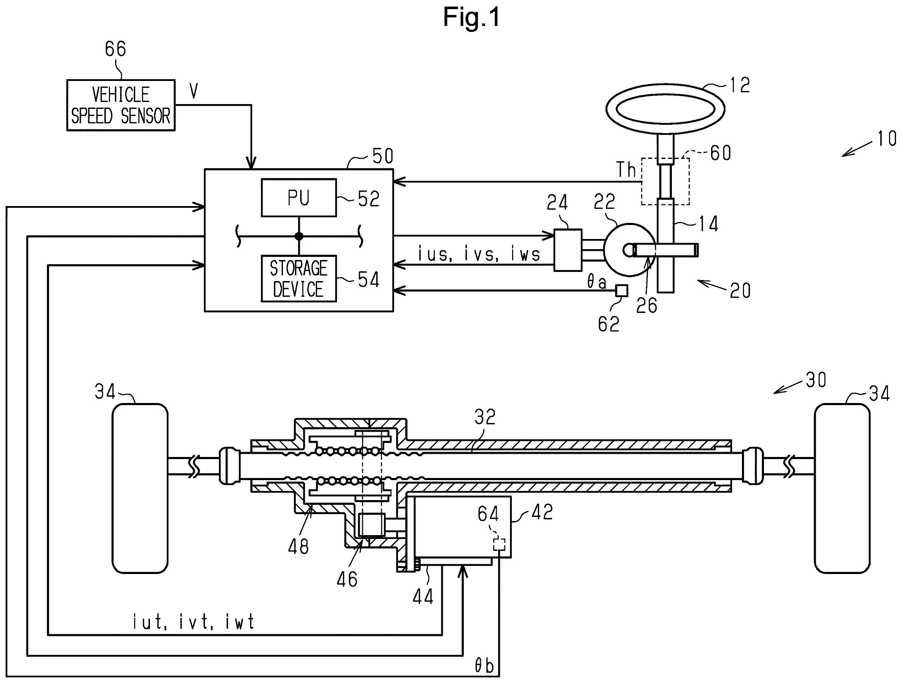

A steering device 10 shown in FIG. 1 is a steer-by-wire system. The steering device 10 includes a steering wheel 12, a steering shaft 14, a reaction force actuator 20, and a steering actuator 30. The steering shaft 14 is coupled to the steering wheel 12. The reaction force actuator 20 applies a force against a force with which a driver operates the steering wheel 12. The reaction force actuator 20 includes a reaction force motor 22, a reaction force inverter 24, and a reaction force reduction mechanism 26. The reaction force motor 22 applies a steering reaction force, which is a force against steering, to the steering wheel 12 via the steering shaft 14. The reaction force motor 22 is coupled to the steering shaft 14 via the reaction force reduction mechanism 26. As one example, the reaction force motor 22 is a three-phase synchronous motor. The reaction force reduction mechanism 26 is, for example, a worm and wheel.

The steering actuator 30 steers steered wheels 34 according to the driver's steering intention indicated by operation of the steering wheel 12 by the driver. The steering actuator 30 includes a rack shaft 32, a steering motor 42, a steering inverter 44, a steering transmission mechanism 46, and a conversion mechanism 48. As one example, the steering motor 42 is a three-phase surface permanent magnet motor (SPM). The steering transmission mechanism 46 is a belt transmission mechanism. Rotational power of the steering motor 42 is transmitted to the conversion mechanism 48 by the steering transmission mechanism 46. The conversion mechanism 48 converts the transmitted rotational power into power for axial displacement of the rack shaft 32. The steered wheels 34 are steered by the axial displacement of the rack shaft 32.

A steering control device 50 controls controlled variables of the steering wheel 12 and the steered wheels 34 that are controlled elements. That is, the steering control device 50 controls a steering reaction force against steering by the driver, namely a controlled variable of the steering wheel 12 as the controlled element. The steering control device 50 also controls a steered angle, namely a controlled variable of the steered wheels 34 as the controlled element. The steered angle is a turning angle of the tire as the steered wheel 34.

The steering control device 50 refers to a steering torque Th detected by a torque sensor 60 for control of the controlled variables. The steering torque Th is torque applied to the steering shaft 14 by the driver through operation of the steering wheel 12. The steering control device 50 refers to a rotation angle θa, namely an angle of the rotation shaft of the reaction force motor 22 detected by a steering-side rotation angle sensor 62, for control of the controlled variables. The steering control device 50 also refers to currents ius, ivs, iws flowing in the reaction force motor 22 for control of the controlled variables. The currents ius, ivs, iws may be detected, for example, as voltage drops across shunt resistors provided in respective legs of the reaction force inverter 24. The steering control device 50 refers to a rotation angle θb, namely an angle of the rotation shaft of the steering motor 42 detected by a steered-side rotation angle sensor 64, for control of the controlled variables. The steering control device 50 also refers to currents iut, ivt, iwt flowing in the steering motor 42 for control of the controlled variables. The currents iut, ivt, iwt may be detected, for example, as voltage drops across shunt resistors provided in respective legs of the steering inverter 44. The steering control device 50 refers to a vehicle speed V detected by a vehicle speed sensor 66.

The steering control device 50 includes a PU 52 and a storage device 54. The PU 52 is a software processing unit such as a CPU, a GPU, or a TPU. The storage device 54 may be a nonvolatile memory that is electrically non-rewritable. The storage device 54 may be a nonvolatile memory that is electrically rewritable, or a storage medium such as a disk medium.

### "Configuration of Reaction Force Actuator 20"

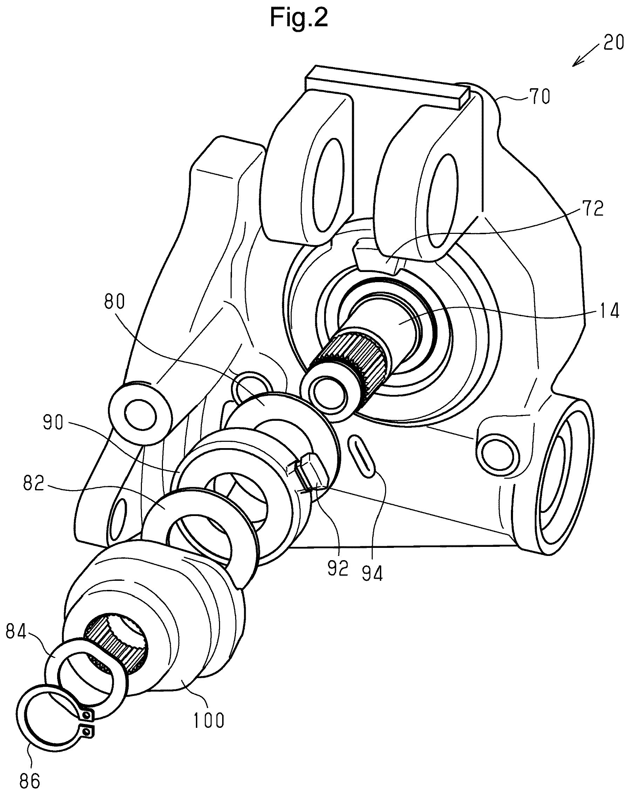

FIG. 2 shows part of the configuration of the reaction force actuator 20. As shown in FIG. 2, the reaction force actuator 20 includes a housing 70 fixed to a vehicle. The steering shaft 14 is inserted into the housing 70. The housing 70 rotatably supports the steering shaft 14. The steering shaft 14 is inserted into a plurality of annular members. The annular members include a washer 80, an intermediate stopper 90, a washer 82, an end stopper 100, a wave washer 84, and a C-shaped snap ring 86.

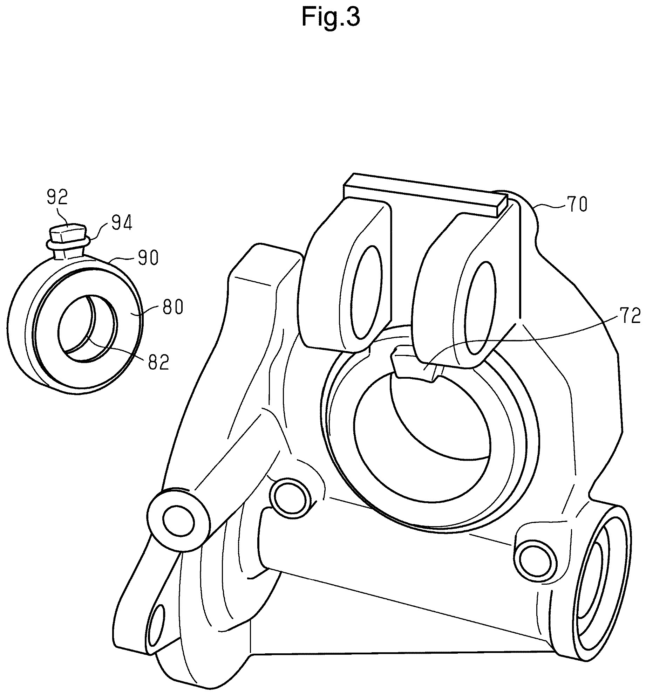

The housing 70 is provided with a protrusion 72 as a restraining member that restrains rotation of the intermediate stopper 90. As shown in FIG. 3, the intermediate stopper 90 is provided with a protrusion 92 whose rotation is restricted by the protrusion 72. An O-ring 94 is fitted onto the protrusion 92.

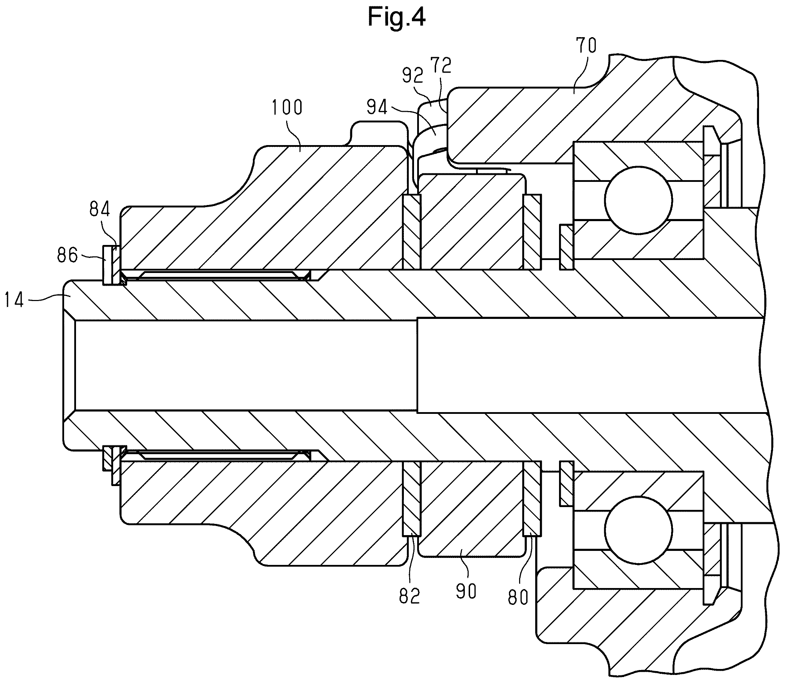

FIG. 4 shows part of a sectional configuration of the reaction force actuator 20. As shown in FIG. 4, an elastic force in the rightward direction in the figure is applied to the end stopper 100 by the wave washer 84. As a result, an elastic force in the rightward direction is applied to the intermediate stopper 90 via the washer 82. The steering shaft 14 has a reduced diameter portion at its end on the left side in the figure. The washer 80, the intermediate stopper 90, and the washer 82 are arranged at the reduced diameter portion of the steering shaft 14. Therefore, rightward displacement of the washer 80 in the figure is restricted. Accordingly, the intermediate stopper 90 is subjected to an elastic force directed rightward in the figure by the washer 82, and to an elastic force directed leftward in the figure by the washer 80.

The end stopper 100 is fixed to the steering shaft 14. Accordingly, the end stopper 100 rotates integrally with the steering shaft 14 as the steering shaft 14 rotates. As the end stopper 100 rotates, the intermediate stopper 90 is rotated together with the end stopper 100.

### "Restriction of Rotation of Steering Shaft 14"

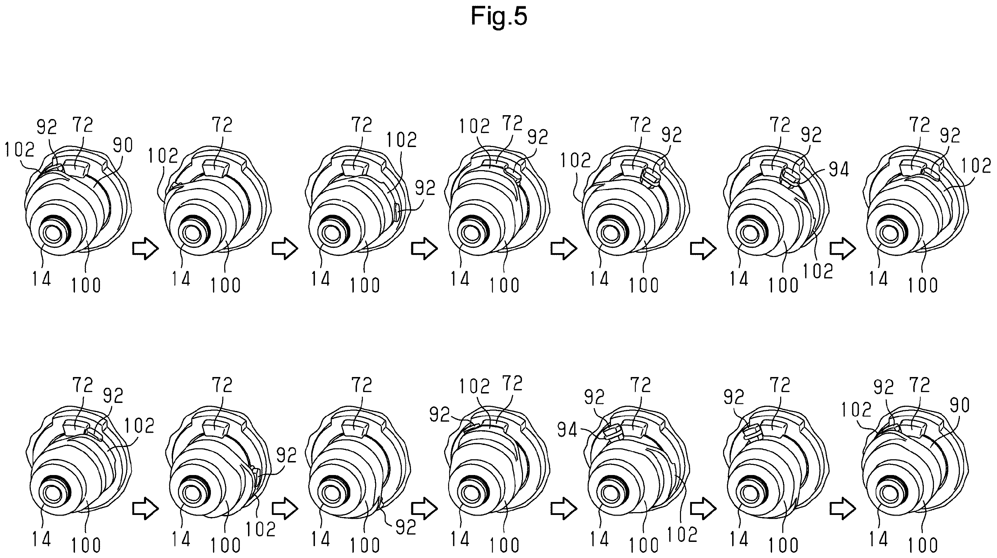

The upper part of FIG. 5 shows a case where the steering shaft 14 rotates toward the right-turn side. The left end of the upper part of FIG. 5 shows a state where a steering angle θs, which is the rotation angle of the steering shaft 14, has a value corresponding to the end on the left-turn side. The upper part of FIG. 5 illustrates that the steering shaft 14 rotates toward the right-turn side as movement proceeds rightward in the figure. In particular, the right end of the upper part of FIG. 5 shows a state where the steering angle θs has a value corresponding to the end on the right-turn side.

As shown in the upper part of FIG. 5, when the steering shaft 14 rotates from the end on the left-turn side toward the right turn, the intermediate stopper 90 is rotated together with the end stopper 100 as the end stopper 100 rotates. The center of the upper part of FIG. 5 shows a state in which the protrusion 92 of the intermediate stopper 90 has come into contact with the protrusion 72 of the housing 70 via the O-ring 94. As a result, the intermediate stopper 90 cannot further rotate toward the right turn. Therefore, the end stopper 100 rotates alone as the steering shaft 14 rotates. When the steering shaft 14 rotates further, a protrusion 102 of the end stopper 100 comes into contact with the protrusion of the intermediate stopper 90 via the O-ring 94. As a result, the end stopper 100 cannot further rotate toward the right turn. This state is shown at the right end of the upper part of FIG. 5. In this state, the steering shaft 14 cannot further rotate toward the right side. The steering angle θs at this time is the upper limit value on the right-turn side.

The lower part of FIG. 5 shows a case where the steering shaft 14 rotates toward the left-turn side. The left end of the lower part of FIG. 5 shows a state where the steering angle θs has a value corresponding to the end on the right-turn side. The lower part of FIG. 5 illustrates that the steering shaft 14 rotates toward the left-turn side as movement proceeds rightward in the figure. In particular, the right end of the lower part of FIG. 5 shows a state where the steering angle θs has a value corresponding to the end on the left-turn side.

As shown in the lower part of FIG. 5, when the steering shaft 14 rotates from the end on the right-turn side toward the left turn, the intermediate stopper 90 is rotated together with the end stopper 100 as the end stopper 100 rotates. The center of the lower part of FIG. 5 shows a state in which the protrusion 92 of the intermediate stopper 90 has come into contact with the protrusion 72 of the housing 70 via the O-ring 94. As a result, the intermediate stopper 90 cannot further rotate toward the left turn. Therefore, the end stopper 100 rotates alone as the steering shaft 14 rotates. When the steering shaft 14 rotates further, the protrusion 102 of the end stopper 100 comes into contact with the protrusion of the intermediate stopper 90 via the O-ring 94. As a result, the end stopper 100 cannot further rotate toward the left turn. This state is shown at the right end of the lower part of FIG. 5. In this state, the steering shaft 14 cannot further rotate toward the left side. The steering angle θs at this time is the upper limit value on the left-turn side.

### "Overview of Control"

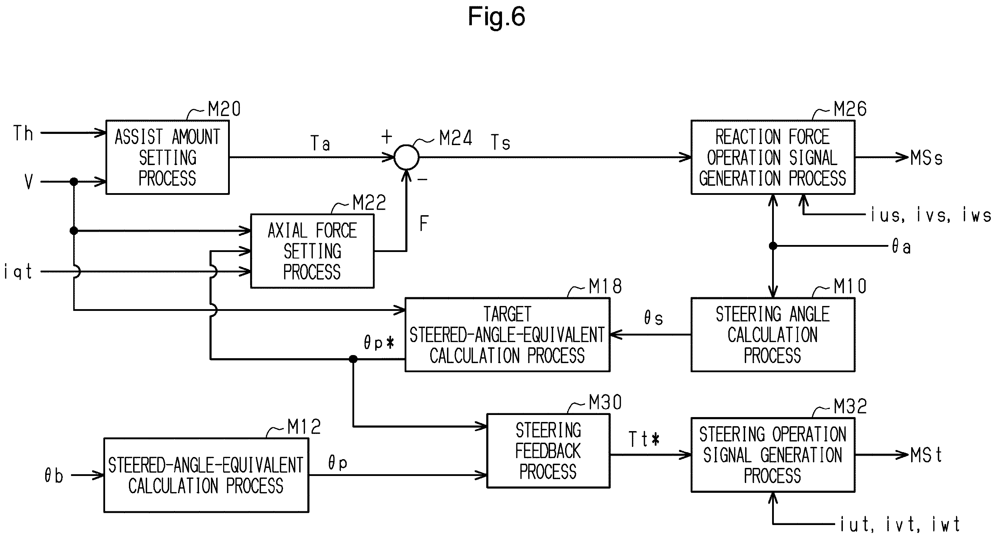

FIG. 6 illustrates processes executed by the steering control device 50. The processes shown in FIG. 6 are implemented by the PU 52 repeatedly executing, for example, at predetermined intervals, a program stored in the storage device 54.

A steering angle calculation process M10 includes a process of converting the rotation angle θa into, for example, a cumulative angle including a range exceeding 360 degrees by counting the number of rotations of the reaction force motor 22 from a steering neutral position, which is a position of the steering wheel 12 when the vehicle is traveling straight ahead. The steering angle calculation process M10 further includes a process of calculating the steering angle θs by multiplying the cumulative angle thus obtained by a conversion coefficient based on the rotational speed ratio of the reaction force reduction mechanism 26.

A steered-angle-equivalent calculation process M12 includes a process of converting the rotation angle θb into, for example, a cumulative angle including a range exceeding 360 degrees by counting the number of rotations of the steering motor 42 from a rack neutral position, which is a position of the rack shaft 32 when the vehicle is traveling straight ahead. The steered-angle-equivalent calculation process M12 further includes a process of calculating a steered-angle-equivalent θp corresponding to the steered angle of the steered wheels 34 by multiplying the cumulative angle thus obtained by a conversion coefficient according to, for example, the reduction ratio of the steering transmission mechanism 46 and the lead of the conversion mechanism 48. The steered-angle-equivalent θp is an amount that is proportional to the steered angle. As one example, the steered-angle-equivalent θp is defined to be positive when it is an angle to the right of the rack neutral position, and negative when it is an angle to the left of the rack neutral position.

A target steered-angle-equivalent calculation process M18 is a process of calculating a target steered-angle-equivalent θp* according to the steering angle θs and the vehicle speed V. An assist amount setting process M20 is a process of calculating an assist amount Ta using the steering torque Th and the vehicle speed V as inputs. The assist amount Ta is an amount in the same direction as the steering direction of the driver. The magnitude of the assist amount Ta is set to a larger value when the force assisting steering by the driver is to be increased.

An axial force setting process M22 is a process of calculating an axial force F acting on the rack shaft 32 through the steered wheels 34, using the vehicle speed V, a q-axis current iqt of the steering motor 42, and the target steered-angle-equivalent θp* as inputs. The axial force F is a value representing, by control, a force acting on the rack shaft 32 through the steered wheels 34. However, the axial force F need not necessarily be intended to estimate the force acting on the rack shaft 32 with high accuracy. The axial force F may be, for example, a force defined virtually as acting on the rack shaft 32. The axial force F is converted into a torque applied to the steering shaft 14. That is, it is converted into a torque applied to the steering shaft 14 under the assumption that power transmission between the steered wheels 34 and the steering shaft 14 is possible. The axial force F is an amount of force acting in the direction opposite to the steering direction of the driver. The axial force setting process M22 may be a process of calculating the axial force F such that the absolute value of the axial force F increases as the absolute value of the target steered-angle-equivalent θp* increases. Alternatively, for example, the axial force setting process M22 may be a process of calculating the axial force F such that the absolute value of the axial force F increases as the vehicle speed V increases. The axial force setting process M22 may be a process of calculating the axial force F such that the absolute value of the axial force F increases as the absolute value of the q-axis current iqt increases. The q-axis current iqt is calculated by the PU 52 according to the steered-angle-equivalent θp and the currents iut, ivt, iwt.

A subtraction process M24 is a process of substituting, for a target reaction torque Ts, a value obtained by subtracting the axial force F from the assist amount Ta. The target reaction torque Ts is a target value of torque applied by the reaction force motor 22 to the steering shaft 14.

A reaction force operation signal generation process M26 is a process of generating an operation signal MSs for the reaction force inverter 24 in order to control the torque of the reaction force motor 22 such that the torque applied to the steering shaft 14 becomes the target reaction torque Ts. Specifically, the reaction force operation signal generation process M26 includes a process of converting the target reaction torque Ts into a target torque of the reaction force motor 22. The reaction force operation signal generation process M26 includes a process of calculating the operation signal MSs for the reaction force inverter 24 so as to bring a current flowing in the reaction force motor 22 closer to a current determined from the target reaction torque Ts by feedback control of the current. The operation signal MSs is actually an operation signal for each of six switching elements of the reaction force inverter 24. Since the torque of the reaction force motor 22 is set to the target reaction torque Ts, a steering reaction force against a force for rotating the steering wheel 12 becomes "(-1)·Ts."

A steering feedback process M30 is a process of substituting, for a target steering torque Tt*, a manipulated variable of feedback control in which the steered-angle-equivalent θp is a controlled variable and the target steered-angle-equivalent θp* is a target value of the controlled variable. The target steering torque Tt* has a constant ratio to a torque of the steering motor 42.

A steering operation signal generation process M32 is a process of generating an operation signal MSt for the steering inverter 44 in order to control the torque of the steering motor 42 such that the torque of the steering motor 42 becomes a value having a constant ratio to the target steering torque Tt*. Specifically, the steering operation signal generation process M32 includes a process of converting the target steering torque Tt* into a target torque of the steering motor 42. The steering operation signal generation process M32 includes a process of calculating the operation signal MSt for the steering inverter 44 so as to bring a current flowing in the steering motor 42 closer to a current determined from the target torque by feedback control of the current. The operation signal MSt is actually an operation signal for each of six switching elements of the steering inverter 44.

### "Assist Amount Setting Process"

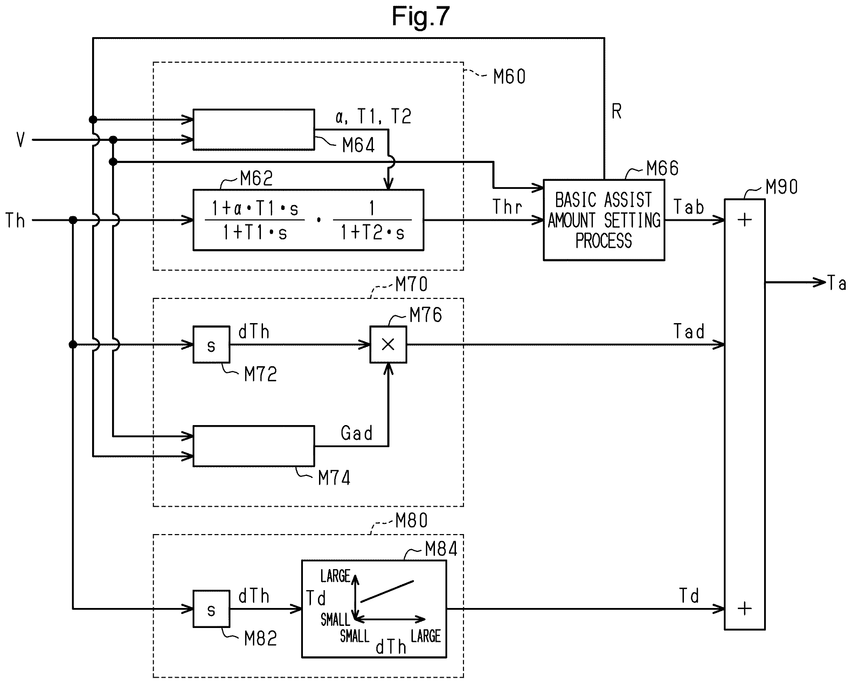

FIG. 7 illustrates details of the assist amount setting process M20. A phase-lag compensation process M60 is a process of delaying the phase of the steering torque Th. This may be, for example, a process of applying phase compensation to the steering torque Th in order to adjust the frequency characteristics of the phase difference between both sides of a torsion bar provided in the torque sensor 60. The phase-compensated steering torque Th, which is an output value from the phase-lag compensation process M60, is a steering torque Thr. The phase-lag compensation process M60 includes a filtering process M62 and a filter coefficient setting process M64.

The filtering process M62 includes a phase-lag filter and a low-pass filter. The transfer function of the phase-lag filter is "(1 + α·T1·s)/(1 + T1·s)." The transfer function of the low-pass filter is "1/(1 + T2·s)." A value obtained by applying processing of the phase-lag filter and the low-pass filter to the steering torque Th is the steering torque Thr.

The filter coefficient setting process M64 sets filter coefficients α, T1 of the phase-lag filter, and a filter coefficient T2 of the low-pass filter. The filter coefficient setting process M64 sets the filter coefficients α, T1, T2 according to the vehicle speed V and an assist gradient R described later.

A basic assist amount setting process M66 is a process of setting a basic assist amount Tab using the steering torque Thr and the vehicle speed V as inputs. The basic assist amount setting process M66 sets the basic assist amount Tab to a value having a positive correlation with the steering torque Thr. This process may be, for example, a process in which the PU 52 performs map calculation of the basic assist amount Tab, in a state where map data is stored in advance in the storage device 54. The map data is data whose input variables are the steering torque Thr and the vehicle speed V, and whose output variable is the basic assist amount Tab.

The map data is a data set including discrete values of the input variables and values of the output variable corresponding to respective values of the input variables. The map calculation may be a process in which, when the values of the input variables match any of the values of the input variables in the map data, the corresponding value of the output variable in the map data is output as a calculation result. The map calculation may be a process in which, when the values of the input variables do not match any of the values of the input variables in the map data, a value obtained by interpolation of a plurality of values of the output variable included in the map data is output as a calculation result. Alternatively, the map calculation may be a process in which, when the values of the input variables do not match any of the values of the input variables in the map data, a value of the output variable in the map data corresponding to the nearest one of a plurality of values of the input variables included in the map data is output as a calculation result.

The basic assist amount setting process M66 includes a process of calculating and outputting the assist gradient R. The assist gradient R indicates the ratio of a change in the basic assist amount Tab to a change in the steering torque Thr.

A phase-lead compensation process M70 is a process of advancing the phase of the assist amount Ta. This may be, for example, for the purpose of applying phase compensation to the assist amount Ta in order to adjust a response delay of a change in the steering wheel 12 with respect to a change in the steering torque Th. The phase-lead compensation process M70 includes a differentiation operation M72, a gain setting process M74, and a multiplication process M76.

The differentiation operation M72 is a process of calculating the first-order time derivative dTh of the steering torque Th. The gain setting process M74 is a process of setting a gain Gad using the assist gradient R and the vehicle speed V as inputs. The gain setting process M74 may be a process of performing map calculation of the gain Gad in a state where map data is stored in advance in the storage device 54. The map data is data in which the assist gradient R and the vehicle speed V are input variables and the gain Gad is an output variable.

The multiplication process M76 is a process of multiplying the time derivative dTh by the gain Gad. The product of the time derivative dTh and the gain Gad is a lead compensation amount Tad as an output of the phase-lead compensation process M70.

A torque differentiation process M80 is a process of calculating a derivative correction amount Td using the steering torque Th as an input. The torque differentiation process M80 includes a differentiation operation M82 and a correction amount calculation process M84. The differentiation operation M82 is a process of calculating the first-order time derivative dTh of the steering torque Th using the steering torque Th as an input. The correction amount calculation process M84 is a process of calculating the derivative correction amount Td using the time derivative dTh as an input. The correction amount calculation process M84 is a process of changing the derivative correction amount Td according to the time derivative dTh under the condition that the derivative correction amount Td in a case where the absolute value of the time derivative dTh is large is greater than or equal to the derivative correction amount Td in a case where the absolute value of the time derivative dTh is small. The derivative correction amount Td has a sign that suppresses a change in the steering torque Th. This may be realized by, for example, setting the sign of the derivative correction amount Td to be equal to the sign of the time derivative dTh.

In the description "changing B according to A under the condition that B in a case where A is large is greater than or equal to B in a case where A is small" in the present specification, the "case where A is large" and the "case where A is small" mean a relative magnitude relationship when both are compared. For example, the "case where A is large" corresponds to a "case where A is a first value," and the "case where A is small" corresponds to a "case where A is a second value smaller than the first value." The above process means that, depending on the setting of the first value and the second value, B in the case where A is the first value may be greater than B in the case where A is the second value.

Specifically, the correction amount calculation process M84 is a process in which, in a state where map data is stored in advance in the storage device 54, the PU 52 performs map calculation of the derivative correction amount Td. The map data is data in which the time derivative dTh is an input variable and the derivative correction amount Td is an output variable.

A synthesis process M90 is a process of adding the lead compensation amount Tad and the derivative correction amount Td to the basic assist amount Tab. The value thus calculated is the assist amount Ta.

### <Functions and Effects of First Embodiment>

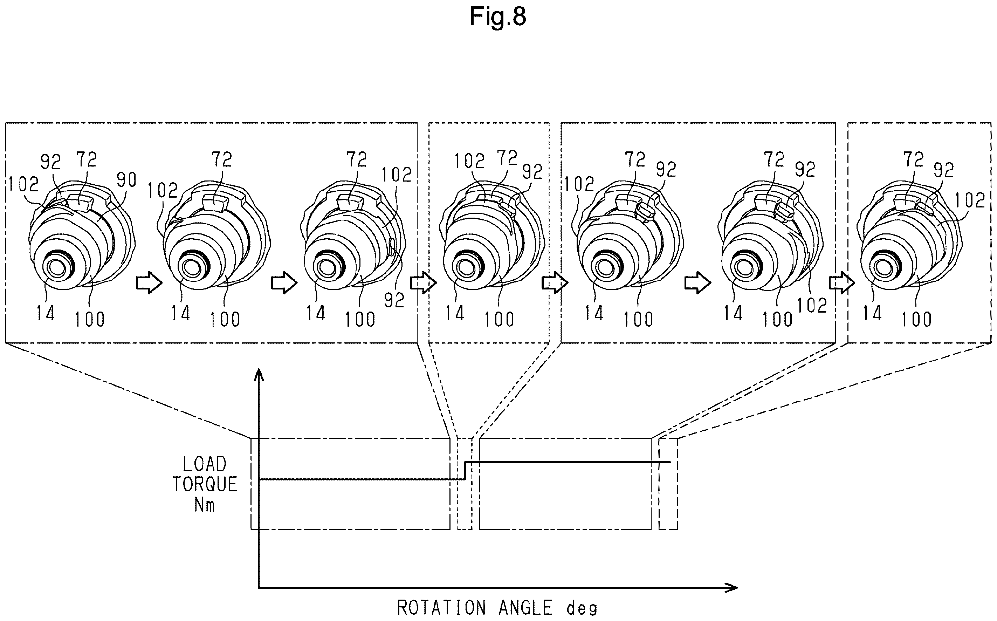

FIG. 8 illustrates a transition of a load torque, which is a torque acting to hinder rotation of the steering shaft 14. FIG. 8 corresponds to the operation in the upper part of FIG. 5.

As shown in FIG. 8, when transitioning from a state in which the intermediate stopper 90 is rotated together with the end stopper 100 as the end stopper 100 rotates to a state in which the end stopper 100 rotates alone, the load torque undergoes a step increase. This is because a frictional force with the intermediate stopper 90 is newly applied when the end stopper 100 rotates.

The PU 52 repeatedly calculates the assist amount Ta at predetermined intervals according to the derivative correction amount Td. When the above load torque undergoes a step increase, the derivative correction amount Td becomes an amount that compensates for the step increase in the load torque. Fluctuations in the steering torque Th are therefore suppressed. Accordingly, perception by the driver of the step increase in the load torque through operation of the steering wheel 12 is inhibited.

The first embodiment further has the following functions and effects. (1-1) The O-ring 94 is provided on the protrusion 92 of the intermediate stopper 90. As a result, an impact upon contact can be mitigated compared with a case where the protrusion 92 directly contacts the protrusion 72.

### <Second Embodiment>

Hereinafter, a second embodiment will be described with reference to the drawings, focusing on differences from the first embodiment.

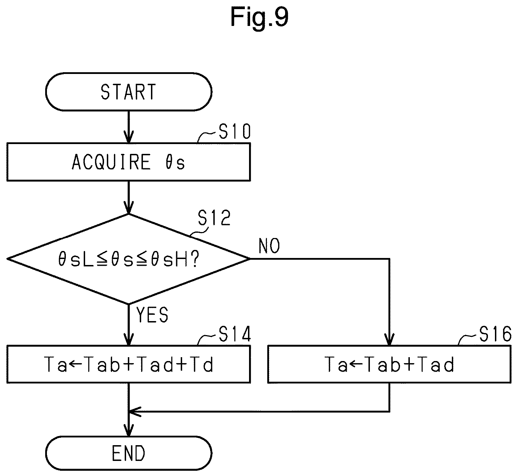

FIG. 9 illustrates the procedure of the synthesis process M90 according to the present embodiment. The series of processes shown in FIG. 9 is implemented by the PU 52 repeatedly executing, for example, at predetermined intervals, a program stored in the storage device 54. In the following description, the step number of each process is denoted by a number preceded by "S."

As shown in FIG. 9, in the series of processes, the PU 52 first acquires the steering angle θs (S10). The PU 52 then determines whether the steering angle θs is within the range (predetermined angle range) from a first angle θsL to a second angle θsH, both inclusive (S12). This range includes the steering angle θs at a point in time when switching occurs from a state where the intermediate stopper 90 is being rotated together with the end stopper 100 as the end stopper 100 rotates to a state where the intermediate stopper 90 is not being rotated together with the end stopper 100 as the end stopper 100 rotates. It is desirable that this range be set as narrow as possible, on the condition that the range covers variation in the steering angle θs at the time of the switching caused by tolerance.

When it is determined that the steering angle θs is within the above range (S12: YES), the PU 52 substitutes, for the assist amount Ta, a value obtained by adding the lead compensation amount Tad and the derivative correction amount Td to the basic assist amount Tab (S14). On the other hand, when it is determined that the steering angle θs is outside the above range (S12: NO), the PU 52 substitutes, for the assist amount Ta, a value obtained by adding the lead compensation amount Tad to the basic assist amount Tab (S16).

When the PU 52 completes the processes of S14 and S16, the series of processes shown in FIG. 9 is temporarily terminated.

### <Functions and Effects of Second Embodiment>

In the present embodiment, the processes S10, S12, S16 in FIG. 9 are added to the first embodiment. Accordingly, the derivative correction amount Td can be reflected in the assist amount Ta solely in the vicinity of the steering angle at which the load torque undergoes a step increase.

### <Third Embodiment>

Hereinafter, a third embodiment will be described with reference to the drawings, focusing on differences from the first embodiment.

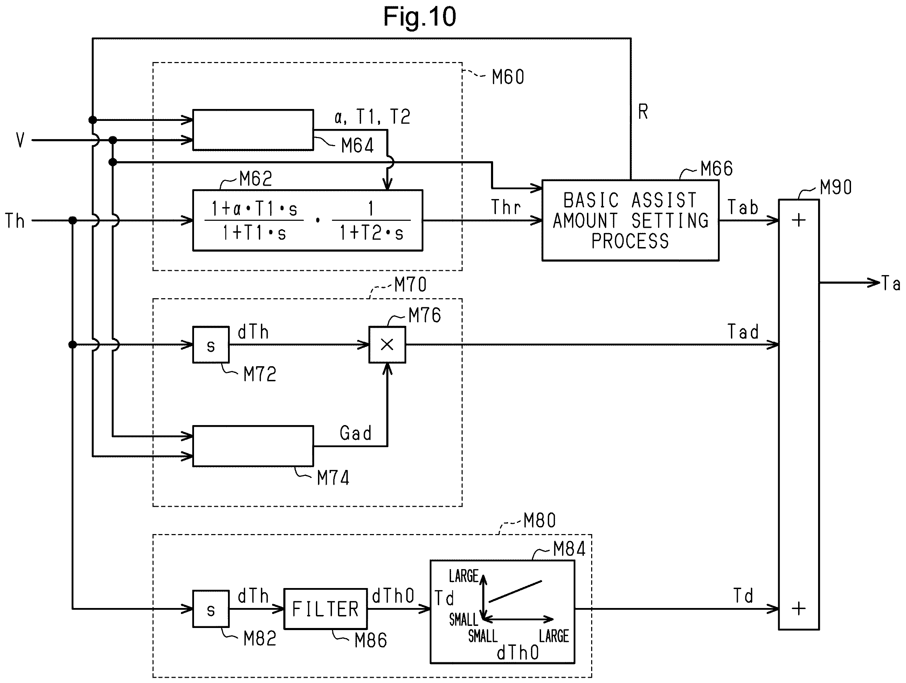

FIG. 10 illustrates details of the assist amount setting process M20 according to the present embodiment. In FIG. 10, processes corresponding to those shown in FIG. 7 are denoted by the same signs as those in FIG. 7 for convenience.

As shown in FIG. 10, the torque differentiation process M80 includes a filtering process M86 that uses the time derivative dTh as an input. The filtering process M86 is a process of extracting, from the time derivative dTh, a frequency component related to the above-mentioned step increase in the load torque. That is, a time derivative dTh0 output by the filtering process M86 indicates the magnitude of the frequency component of the time derivative dTh related to the step increase in the load torque. The correction amount calculation process M84 is a process of calculating the derivative correction amount Td using the time derivative dTh0 as an input. Specifically, the correction amount calculation process M84 is a process in which, in a state where map data is stored in advance in the storage device 54, the PU 52 performs map calculation of the derivative correction amount Td. The map data is the above-described map data in which the input variable is the time derivative dTh0 instead of the time derivative dTh.

### <Functions and Effects of Third Embodiment>

In the present embodiment, the filtering process M86 is added to the first embodiment. Accordingly, the derivative correction amount Td can be selectively reflected in the assist amount Ta when the load torque undergoes a step increase.

### <Other Embodiments>

The present embodiment can be modified as described below. The above embodiments and the modifications described below can be combined as long as no technical contradictions arise.

"Regarding Correction Amount Calculation Process"
- The correction amount calculation process need not necessarily be a process of performing map calculation of the derivative correction amount Td using map data in which the time derivative dTh is an input variable and the derivative correction amount Td is an output variable. For example, the process may be a process of substituting, for the derivative correction amount Td, a value obtained by multiplying the time derivative dTh by a gain.

"Regarding Correction Amount"
- The correction amount is not limited to the derivative correction amount Td. For example, the correction amount may be a value obtained by multiplying, by a gain, an output value of a high-pass filter that uses the steering torque Th as an input. Alternatively, the correction amount may be, for example, a predetermined fixed value. In that case, for example, a process may be executed of determining whether the absolute value of the difference between a current value of the steering torque Th and a previous value of the steering torque Th is greater than or equal to a threshold, and when the absolute value is greater than or equal to the threshold, the assist amount Ta may be calculated using the correction amount.

"Regarding Assist Amount Setting Process"
- The assist amount setting process is not limited to a process of setting, to the assist amount Ta, a value obtained by adding the sum of a correction amount for compensating for a step in load torque and the phase-lead compensation amount Tad to the basic assist amount Tab. For example, a hysteresis correction amount, namely a correction amount for making the assist amount Ta different between returning and re-steering of the steering wheel 12, may additionally be added to the basic assist amount Tab. Alternatively, for example, a damping correction amount, namely is a correction amount having a negative correlation with a rotational speed of the steering wheel 12, may additionally be added to the basic assist amount Tab. Alternatively, for example, a return correction amount, namely a correction amount for returning the steering wheel 12 to the neutral position, may additionally be added to the basic assist amount Tab.

- The input of the basic assist amount calculation process need not necessarily be the steering torque Thr that is the output of the phase-lag compensation process M60. For example, the input of the basic assist amount calculation process may be the steering torque Th.
- The phase-lead compensation process M70 need not necessarily be a process of substituting, for the lead compensation amount Tad, a value obtained by multiplying the time derivative dTh by the gain Gad. For example, the process may be a process of performing map calculation of the lead compensation amount Tad using map data in which the time derivative dTh is an input variable and the lead compensation amount Tad is an output variable.
- The phase-lead compensation process M70 need not necessarily use the time derivative dTh. For example, the phase-lead compensation process M70 may be a process of determining the lead compensation amount Tad as a value obtained by filtering the steering torque Th.
- The assist amount setting process does not necessarily include the phase-lead compensation process M70.

### "Regarding Buffer Member"

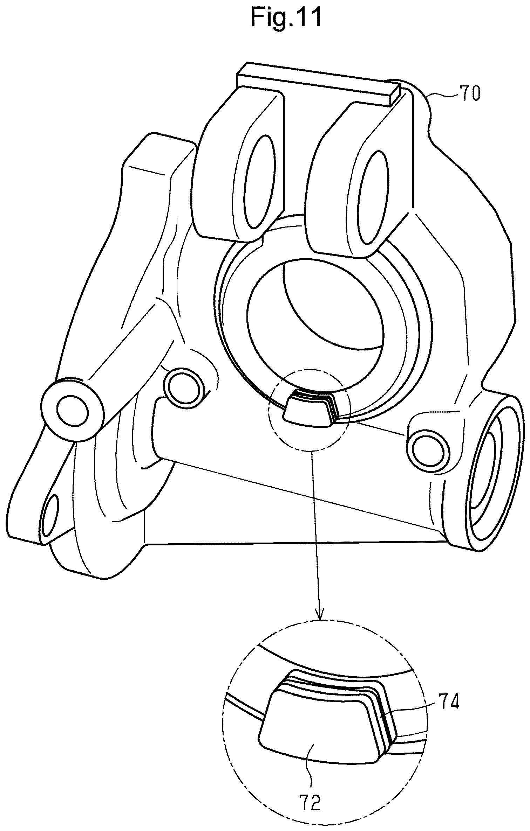

- In FIG. 3, the O-ring 94 is illustrated as an example of a buffer member that mitigates an impact at the time of contact between the intermediate stopper 90 and the housing 70. However, the buffer member is not limited to this. For example, the buffer member may be a rubber member.
   - The buffer member that mitigates an impact at the time of contact between the intermediate stopper 90 and the housing 70 need not necessarily be provided on the intermediate stopper 90. FIG. 11 illustrates an example in which an O-ring 74 is provided on the protrusion 72 of the housing 70. In this case, the restraining member that is provided on the housing 70 and restrains rotation of the intermediate stopper 90 includes the protrusion 72 and the O-ring 74. A rubber member may be provided instead of the O-ring 74.
   - The buffer member that mitigates an impact at the time of contact between the intermediate stopper 90 and the housing 70 need not necessarily be provided. "Regarding Device That Restricts Rotation of Steering Shaft 14"
- The device that restricts rotation of the steering shaft 14 is not limited to the device illustrated in the above embodiments. For example, the device may include a plurality of intermediate stoppers that is rotated together with the end stopper 100 as the end stopper 100 rotates. A case where the device includes a first intermediate stopper and a second intermediate stopper will be described as an example. In such a case, the first intermediate stopper and the second intermediate stopper are rotated together with the end stopper 100 as the end stopper 100 rotates. When a protrusion of the first intermediate stopper comes into contact with the protrusion 72 of the housing 70, the rotation of the first intermediate stopper is stopped. As a result, the second intermediate stopper alone is rotated together with the end stopper 100 as the end stopper 100 rotates. When a protrusion of the second intermediate stopper comes into contact with the protrusion of the first intermediate stopper, the rotation of the second intermediate stopper is stopped. As a result, the end stopper 100 rotates alone. When the protrusion 102 of the end stopper 100 comes into contact with the protrusion of the second intermediate stopper, the rotation of the end stopper 100 is stopped. That is, further rotation of the steering shaft 14 is stopped.

"Regarding Steering Control Device"
- The steering control device is not limited to one that executes software processing. For example, the steering control device may include a dedicated hardware circuit, such as an ASIC, that executes at least part of the processing performed in the above embodiments by hardware processing. That is, the steering control device may include a processing circuit having any of the following configurations (a) to (c): (a) a processing circuit including a processing unit that executes all of the above processes according to a program and a program storage device such as a storage device that stores the program, (b) a processing circuit including a processing unit and a program storage device that execute part of the above processes according to a program, and a dedicated hardware circuit that executes the remaining processes, and (c) a processing circuit including a dedicated hardware circuit that executes all of the above processes. A plurality of software execution devices including the processing unit and the program storage device may be provided. A plurality of dedicated hardware circuits may also be provided.

"Regarding Control Entity"
- The entity that executes control need not necessarily be a single steering control device. For example, the above processes may be executed in cooperation between the steering control device and a user's mobile terminal. Specifically, for example, the axial force setting process M22 may be executed by the user's mobile terminal.

"Others"
- In each of the above embodiments, the steering device 10 has a linkless structure in which the steering wheel 12 and the steered wheels 34 are mechanically separated at all times. However, the steering device 10 is not limited to this. For example, the steering device 10 may have a structure in which the steering wheel 12 and the steered wheels 34 are mechanically separable by a clutch.

### <Additional Notes>

A rotation restraining device that is configured to restrain rotation of a steering shaft configured to be operated to rotate according to steering by a driver with power transmission to a steered wheel being interrupted, the rotation restraining device including: a first rotary member configured to rotate in conjunction with the steering shaft; a second rotary member configured to be rotated together with the first rotary member as the first rotary member rotates; and a restraining member configured to, when a rotation angle of the second rotary member reaches a predetermined angle, contact the second rotary member to restrain rotation of the second rotary member, wherein: the first rotary member and the second rotary member are configured to, when the first rotary member rotates by a predetermined amount from an angle at which the rotation of the second rotary member is restrained, contact each other such that the second rotary member restrains rotation of the first rotary member; and the restraining member includes a buffer material at a portion configured to contact the second rotary member when the rotation angle of the second rotary member reaches the predetermined angle.

## Claims

1. A steering control device that is configured to operate a reaction force actuator configured to apply a reaction force to a steering shaft configured to be operated to rotate according to steering by a driver with power transmission to a steered wheel being interrupted, wherein:
the reaction force actuator includes
a first rotary member configured to rotate in conjunction with the steering shaft,
a second rotary member configured to be rotated together with the first rotary member as the first rotary member rotates, and
a restraining member configured to, when a rotation angle of the second rotary member reaches a predetermined angle, contact the second rotary member to restrain rotation of the second rotary member;
the first rotary member and the second rotary member are configured to, when the first rotary member rotates by a predetermined amount from an angle at which the rotation of the second rotary member is restrained, contact each other such that the second rotary member restrains rotation of the first rotary member;
the steering control device is configured to execute a reaction-force-command-value setting process and an operation process;
the reaction-force-command-value setting process is a process of calculating a reaction torque command value that is a command value of a torque variable indicating the reaction force, and includes a process of superimposing, on the reaction torque command value, a correction amount that has a negative correlation with an amount of change in a steering torque that is a torque input to the steering shaft by the driver; and
the operation process is a process of operating the reaction force actuator according to the reaction torque command value.

2. The steering control device according to claim 1, wherein:
the reaction-force-command-value setting process includes a torque derivative calculation process and a correction amount calculation process;
the torque derivative calculation process is a process of calculating a time derivative of the steering torque; and
the correction amount calculation process is a process of calculating the correction amount using the time derivative of the steering torque as an input.

3. The steering control device according to claim 2, wherein the steering control device is configured to repeatedly execute the torque derivative calculation process and the correction amount calculation process at predetermined intervals.

4. The steering control device according to claim 2, wherein the steering control device is configured to execute the correction amount calculation process within a predetermined angle range of the steering shaft, the predetermined angle range including a rotation angle at which switching occurs from one of following states to the other: a state where the first rotary member rotates while causing the second rotary member to be rotated together with the first rotary member, and a state in which the first rotary member rotates without causing the second rotary member to be rotated together with the first rotary member.

5. The steering control device according to claim 2, wherein the correction amount calculation process is a process of calculating the correction amount according to a value obtained by filtering the time derivative.

6. The steering control device according to claim 2, wherein:
the reaction-force-command-value setting process further includes, in addition to the correction amount calculation process, a phase-lead compensation process; and
the phase-lead compensation process is a process of reflecting, in the reaction torque command value, a lead compensation amount for advancing a phase of the reaction torque command value using the time derivative of the steering torque.

7. A steering control method for operating a reaction force actuator configured to apply a reaction force to a steering shaft configured to be operated to rotate according to steering by a driver with power transmission to a steered wheel being interrupted, wherein:
the reaction force actuator includes
a first rotary member configured to rotate in conjunction with the steering shaft,
a second rotary member configured to be rotated together with the first rotary member as the first rotary member rotates, and
a restraining member configured to, when a rotation angle of the second rotary member reaches a predetermined angle, contact the second rotary member to restrain rotation of the second rotary member;
the first rotary member and the second rotary member are configured to, when the first rotary member rotates by a predetermined amount from an angle at which the rotation of the second rotary member is restrained, contact each other such that the second rotary member restrains rotation of the first rotary member;
the steering control method includes
executing a reaction-force-command-value setting process, and
executing an operation process;
the reaction-force-command-value setting process is a process of calculating a reaction torque command value that is a command value of a torque variable indicating the reaction force, and includes a process of superimposing, on the reaction torque command value, a correction amount that has a negative correlation with an amount of change in a steering torque that is a torque input to the steering shaft by the driver; and
the operation process is a process of operating the reaction force actuator according to the reaction torque command value.
